# EUROPEAN PATENT APPLICATION

(11) **EP 4 129 904 A1**
(43) Date of publication of application: **08.02.2023**
(21) Application number: 22183013.6
(22) Date of filing: 05.07.2022
(51) Int. Cl.: C01B 33/20, C04B 35/00, C10M 113/00

(54) **METHOD FOR SYNTHESIZING CUSPIDINE AND FLUOROSILICATES AND USES THEREOF**

(30) Priority: 02.08.2021 IT 202100020738
(71) Applicant: Prosimet S.p.A., 24040 Filago (BG) (IT)
(72) Inventor: CARLI, Riccardo, I-24040 Filago, BERGAMO (IT); ALLONI, Marco, I-24040 Filago, BERGAMO (IT)
(74) Representative: Long, Giorgio

(57) **Abstract**

The present invention relates to a method for synthesizing fluorosilicates and silicates starting from low-cost raw materials and the use thereof in the sector of solid lubricants for metallurgical castings or glass-ceramics.

In particular, the present invention relates to a method for synthesizing fluorosilicates and silicates comprising the cooking, at a temperature comprised between 600°C and 850°C, of a mixture of starting materials, said mixture comprising compounds of Ca, Na, Si, O and F, wherein the mixture of starting materials comprising compounds of Ca, Na, Si, O and F has the following ponderal composition, excluding loss by calcination: Ca (as CaO) 35%-55%, Na (as Na₂O) 4%-25%, Si (as SiO₂) 15%-45%, F 4%-20%, and wherein the products of said method comprise cuspidine and/or dicalcium sodium fluorosilicate.

## Description

### Field of the invention

The present invention relates to a method for synthesizing fluorosilicates and silicates starting from low-cost raw materials and the use thereof in the sector of solid lubricants for metallurgical castings or glass-ceramics.

### Background art

Two main categories of continuous steel casting processes are known, that is, close casting and open casting. In close casting processes, the use of a particular tube made of a ceramic material, referred to as an "unloader" ("submerged entry nozzle", SEN), for conveying the liquid steel from the tundish to the ingot mold, allows using the most modern lubricating systems consisting of powders for continuous casting. Vice versa, in open casting processes, where there is certainly a cost saving due to the provision of the unloader, lubricating oils of mineral, vegetable or synthetic origin are used. However, this type of lubricants does not always ensure an efficient lubrication. Consequently, there is an excessive formation of flakes, cracks, lozenges and rolling difficulties.

One factor that plays a key role in the operating practice of modern techniques of producing steel is casting powder. Casting powders were used for the first time in Belgium, in 1958 for casting ingots and, in 1963, they were adapted to be used as a lubricant in continuous steel casting instead of oil. On heating, these products form an accumulation of molten slag on the steel, which infiltrates the space between the ingot mold and the skin of the steel being formed, providing the necessary lubrication and controlling the amount of heat transmitted by means of forming different crystalline and glass layers.

The ingot mold lubricating powders, which, as said, are used in close castings, normally consist of a mixture of various minerals. Depending on the production techniques used, such powders are available in different forms, e.g. atomized granular powders, extruded powders and powders obtained by fritting.

Once added to the surface of the cast steel in ingot molds, the lubricating powders mainly have four functions and they can be summarized as follows: i) thermal insulation of the liquid steel in ingot mold, to prevent the solidification thereof; ii) protection of the surface of the steel from oxidation; iii) lubrification and control of the heat exchange between the wall of the ingot mold and the outer solidified steel shell; iv) absorption of any non-metal inclusions coming from the steel. Once poured into the ingot mold, the powders lose part of the carbon by oxidation and heat up in contact with the liquid steel, forming a sintered layer and a molten one. The latter is distributed over the entire free surface of the steel and, by virtue of the oscillations of the ingot mold, is infiltrated into the gap between this and the outermost shell of solidified steel. Thereby, the liquid layer acts as a lubricant. In turn, the infiltrated liquid partially solidifies in contact with the ingot mold, the wall of which is generally water cooled, forming a layer of solid slag. The role of this layer is to allow an adequate heat transfer level between the shell of solidified steel and the ingot mold.

As regards the chemical composition, the main constituents of the casting powders can be split into four classes: *network formers* (SiO₂, Al₂O₃), *network breakers* (CaO, MgO), *fluxes* (Li₂O, Na₂O, K₂O, CaF₂, B₂O₃) and carbon.

The specific composition of these products can be obtained from the combination of different raw materials, the most common of which are reported below:
- Coke, graphite, lampblack (C)
- Feldspars, Wollastonite, Perlite, Sand, Clay, Glass, Ash (SiO₂)
- Cement, Clay, Wollastonite, CaCO₃, Dolomite, Calcium Fluoride, Glass (CaO)
- Cement, Clay, Alumina, Corundum, Bauxite, Feldspars, ash (Al₂O₃)
- Calcined magnesite, Magnesium Carbonate, Olivine, Magnesium Silicates, Dolomite (MgO)
- Feldspars, Cryolite, Sodium Silicate, Sodium Fluoride, Sodium Carbonate, Glass (Na₂O)
- Calcium Fluoride, Cryolite, Sodium Fluoride (F)
- Borax, Colemanite (B₂O₃)
- Spodumene, Li₂CO₃ (Li₂O).

The supply of good quality raw materials, with homogenous and constant features is at the base of the production of an effective powder. However, some raw materials, e.g. wollastonite, alumina, magnesite, have supply problems for geopolitical and financial reasons.

In some countries where the energy costs are lower, the raw materials stated above are mixed and heated in special furnaces at 900°C to obtain complete sintering, or at over 1000°C to fuse them. The mass obtained mainly consists of an amorphous material, having a varying composition depending on the mixture loaded, which is then mixed with carbon sources in order to produce the so-called pre-sintered and pre-fused casting powders.

The present inventors thoroughly studied the fusion mechanism of the casting powders, gaining an understanding of the chemical-physical mechanisms, which regulate this process and they experimentally observed that always, when heating steel casting to very high temperatures, cuspidine (Ca₄Si₂O₇F₂), or the intercalation compound thereof with the sodium oxide (dicalcium sodium fluorosilicate, Ca₂NaSiO₄F), is formed, which, by further reacting with the other species present and/or formed, leads to the fusion of the lubricating powder.

Cuspidine and dicalcium sodium fluorosilicate are natural minerals the current syntheses of which are limited to small laboratory amounts and comprise elevated temperatures (>1000°C).

Based on such observations, the inventors of the present patent application thought that the aforesaid compounds and the fluorosilicates and silicates or mixed silicates in general, which are formed *in situ* when using the casting powders starting from the previously listed raw materials, could be used directly in the lubricating powders for casting. Then, the aforesaid inventors considered the problem of developing a synthesis of fluorosilicates and silicates starting from raw materials, which are easily accessible, have a contained cost and comprise less drastic reaction conditions with respect to those of the known syntheses.

### Summary of the invention

Therefore, it is an object of the present invention to provide a method for synthesizing fluorosilicates and silicates, starting from easily accessible raw materials, having a contained cost and comprising sufficiently bland reaction conditions so as to be applicable on an industrial scale.

Such object is achieved by a method, as delineated in the accompanying claims, the definitions of which are an integral part of the present patent application for the purposes of the sufficient description.

Therefore, a method for synthesizing fluorosilicates and silicates is an object of the present invention, comprising the heating, at a temperature of between 600°C and 850°C, of a mixture of starting materials, said mixture comprising compounds of Ca, Na, Si, O and F, wherein the mixture of starting materials comprising compounds of Ca, Na, Si, O and F, has the following ponderal composition, excluding loss by calcination: Ca (as CaO) 35%-55%, Na (as Na₂O) 4%-25%, Si (as SiO₂) 15%-45%, F 4%-20%, and wherein the products of said method comprise cuspidine and/or dicalcium sodium fluorosilicate.

A second object of the invention is the use of the products of the aforesaid method as component of a lubricating casting powder and the lubricating casting powder thus obtained.

A further object of the invention is the use of the products of the aforesaid method for manufacturing a functional or bioactive glass-ceramic and the glass-ceramic thus obtained.

### Brief description of the drawings

Figure 1 is a DSC-TGA graph showing the trend of the formation reaction of fluorosilicates and mixed silicates according to the invention;
Figure 2 is a diffractometric analysis graph of the products obtained according to a first embodiment of the invention;
Figure 3 is a diffractometric analysis graph of the products obtained according to a second embodiment of the invention;
Figure 4 is a diffractometric analysis graph of the products obtained according to a third embodiment of the invention;
Figure 5 is a diffractometric analysis graph of the products obtained according to a fourth embodiment of the invention.

### Detailed description of the invention

The present invention relates to a method for synthesizing fluorosilicates and silicates, comprising the cooking, at a temperature comprised between 600°C and 850°C, of a mixture of starting materials, said mixture comprising compounds of Ca, Na, Si, O and F, said starting materials preferably being selected from limestone, lime, calcium silicates, glass, sodium silicates, sand, fluorite, sodium carbonate, feldspar and ash.

In a preferred embodiment, the mixture of starting materials comprising compounds of Ca, Na, Si, O and F has the following ponderal composition, excluding loss by calcination: Ca (as CaO) 35%-55%, Na (as Na₂O) 4%-25%, Si (as SiO₂) 15%-45%, F 4%-20%.

The limestone or ground limestone rock mainly gives the mixture of materials the elements Ca and O and has the following ponderal composition, excluding loss by calcination: Ca (as CaO) >35%, Si (as SiO₂) <10%.

The lime mainly gives the mixture of materials the elements Ca and O and has the following ponderal composition, excluding loss by calcination: Ca (as CaO) >80%, Si (as SiO₂) <10%, Mg (as MgO) <5%.

Calcium silicates (CaSiO₃), e.g. Wollastonite, mainly give the mixture of materials the elements Ca, Si and O and have the following ponderal composition, excluding loss by calcination: Ca (as CaO) between 45% and 56%, Si (as SiO₂) <10%, Mg (as MgO) 45-55%.

Glass (SiO₂ and other oxides), also in the form of glass scraps, mainly gives the mixture of materials the elements Si and O and has the following ponderal composition, excluding loss by calcination: Si (as SiO₂) 60-80%, Al (as Al₂O₃) <2%, Na and K (as Na₂O+K₂O) 10-20%, Ca (as CaO) 5-20%, Mg (as MgO) <5%.

Sodium silicates mainly give the mixture of materials the elements Na, Si and O and have the following ponderal composition, excluding loss by calcination: Si (as SiO₂) 40-60%, Na and K (as Na₂O+K₂O) 40-60%.

Sand, in particular, silica sand, mainly gives the mixture of materials the elements Si, O and has the following ponderal composition, excluding loss by calcination: Si (as SiO₂) > 90%, Al (as Al₂O₃) <5%, Na and K (as Na₂O+K₂O) <5%.

Fluorite (CaF₂) mainly gives the mixture of materials the elements Ca and F and has the following ponderal composition, excluding loss by calcination: CaF₂ >80%, SiO₂ <20%.

Sodium carbonate (Na₂CO₃) mainly gives the mixture of materials the elements Na and O and has the following ponderal composition, excluding loss by calcination: Na and K (as Na₂O+K₂O) 50-65%.

Feldspar mainly gives the mixture of materials the elements Na, Si and O and has the following ponderal composition, excluding loss by calcination: Si (as SiO₂) 60-75%, Al (as Al₂O₃) 10-30%, Na and K (as Na₂O+K₂O) 5-20%.

Ash mainly gives the mixture of materials the elements Na, Si and Al and has the following ponderal composition, excluding loss by calcination: Si (as SiO₂) 40-65%, Al (as Al₂O₃) 20-50%, Na and K (as Na₂O+K₂O) <20%.

Depending on the mixture of starting materials used and, in particular, the percentage composition thereof, cuspidine will be obtained as the main product and dicalcium sodium fluorosilicate and/or combeite as sub-products; or dicalcium sodium fluorosilicate and cuspidine and/or combeite as sub-products.

In any case, the mixture of compounds obtained according to the method of the invention can be used, in combination with additional convenient compounds, in the preparation of lubricating casting powders or glass-ceramics, which will be described better below.

Cuspidine is a mineral of formula Ca₄Si₂O₇(F, OH)₂, which occurs in the form of lanceolate crystals, mainly present in volcanic materials. Syntheses of such compound are not known.

Dicalcium sodium fluorosilicate (Ca₂NaSiO₄F) is a compound with an orthorhombic structure, which can generate monocline superstructures. Laboratory syntheses of such compound are reported, wherein the reaction temperature is considerably higher than 1000°C.

Combeite is a mineral of formula Na₂Ca₂Si₃O₉ discovered in 1957 made of a volcanic material originating from the Congo. It is formed in varying amounts by heat treatment of certain bioactive glass-ceramics, of which it varies the mechanical properties.

The cooking can be carried out in both static furnaces (muffles) and continuous ones (rotary kilns or tunnel ovens) with a starting material mixture thickness preferably comprised between 0.5 and 20 cm and with a residence time at the temperatures indicated above, preferably comprised between 30 minutes and 24 hours.

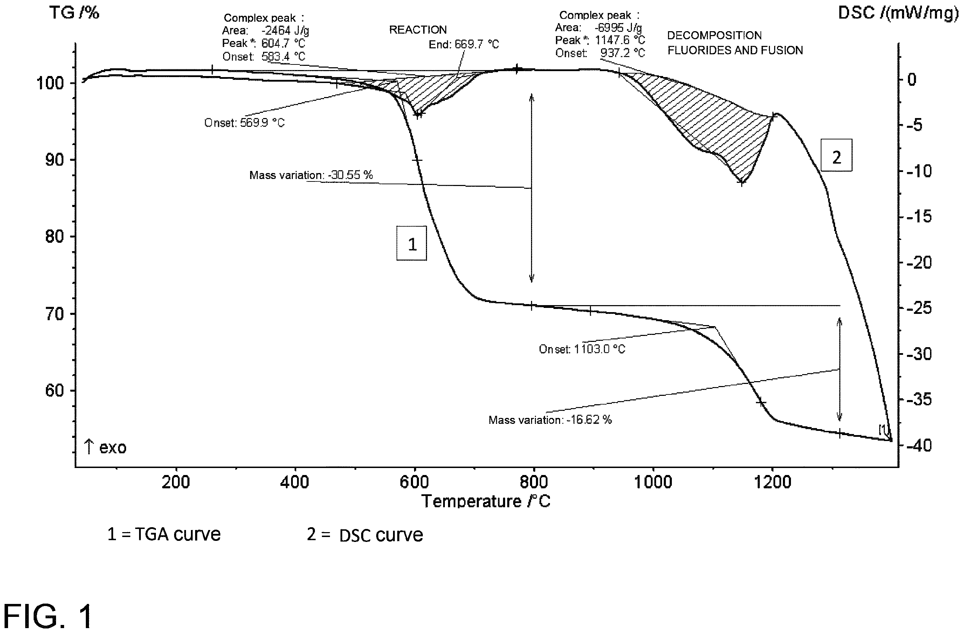

The DSC-TGA analysis reported in figure 1 shows how the reaction is carried out starting from a mixture of calcium carbonate, sand, sodium carbonate and fluorite. The synthesis reaction of dicalcium sodium fluorosilicate and cuspidine takes place at a relevant speed between 600°C and 800°C, a temperature, which also corresponds to the complete decomposition of the carbonates, in fact, the measurement of the residual content of inorganic carbon is a good method for determining the advancement of the reaction. It is important not to exceed the temperature of 850°C so as not to have the formation of gaseous fluorides, which would impoverish the mixture in the content in fluorine.

In a particular embodiment of the invention, the method of the invention comprises the cooking, at a temperature comprised between 600°C and 850°C, of a mixture of starting materials, said mixture comprising compounds of Ca, Na, Si, O and F, preferably selected from those listed above, having the following ponderal composition, excluding loss by calcination: CaO 40%-50%, SiO₂ 35%-45%, Na₂O 4%-8%, F 4%-10%, and wherein the product is substantially a mixture of cuspidine as main product and combeite as sub-product.

In a different particular embodiment of the invention, the method of the invention comprises the cooking, at a temperature comprised between 600°C and 850°C, of a mixture of starting materials, said mixture comprising compounds of Ca, Na, Si, O and F, preferably selected from those listed above, having the following ponderal composition, excluding loss by calcination: CaO 40%-50%, SiO₂ 30%-40%, Na₂O 5%-15%, F 5%-15%, and wherein the product is substantially a mixture of cuspidine and dicalcium sodium fluorosilicate.

In yet another different embodiment of the invention, the method of the invention comprises the cooking, at a temperature comprised between 600°C and 850°C, of a mixture of starting materials, said mixture comprising compounds of Ca, Na, Si, O and F, preferably selected from those listed above, having the following ponderal composition, excluding loss by calcination: CaO 45%-55%, SiO₂ 20%-30%, Na₂O 10%-25%, F 5%-15%, and wherein the product is substantially dicalcium sodium fluorosilicate.

The term "substantially" as used here in relation to a single compound or to a mixture of two compounds means that the reaction product may also contain other fluorosilicate products or silicates of alkaline metals, alkaline-earth or mixed, but in smaller amounts or only in traces.

The single fluorosilicates, in particular, cuspidine and dicalcium sodium fluorosilicate, or mixtures thereof, possibly in the presence of other silicates and/or mixed silicates, obtainable with the method of the present invention can be used as component of the lubricating casting powders.

The lubricating powder can be a powder for ingot molds normally used in continuous casting processes.

For example, the lubricating powder can be formulated so as to maximize the speed of the phase transition, having an initial melting point at less than about 600°C, preferably at about 580°C, and so as to obtain therefrom a fused mixture, which produces a good lubricating action of the system.

The term "initial melting point" is understood to mean the lowest temperature at which a first liquid step is formed in the mass of lubricating powder, i.e. the temperature at which the solid starts to melt and at which the first drop of liquid is formed. This definition is applicable to mixtures of substances, which typically melt in a wide range of temperatures.

Such temperature, like all the reaction temperatures indicated in the present description and in the claims, can be measured using different methods, such as those described in C.A. Pinheiro et al., KEEPING CURRENT I, March 1995, pages 76-77. For example, the temperature of the initial melting point of the solid lubricating composition of the invention can be determined by means of a high temperature microscope, the so-called "quench test" or differential thermal analysis (DTA). The differences in measurements using such methods is generally lower than 5%, whereby the terms "about 600°C" and "about 580°C" for the values of the initial melting point reported above, must be understood as "600°C ± 30°C" and "580°C ± 29°C".

In addition to the mixture containing fluorosilicates obtainable with the method of the following invention, the lubricating powder can generally comprise carbon in the form of graphite, ground coke or lampblack, SiO₂, Al₂O₃, Na₂O, CaO, fluorides, oxides of transition metals and other oxides and, in certain embodiments, it can have the following features:
- Basicity index, CaO/SiO₂, comprised in the range 0.25-1.8;
- Content of alkalis, comprised in the range 0.1-15.0 % wt.;
- Content of alkaline earth metals, comprised in the range 0.1-45.0 % wt.;
- Content of alumina comprised in the range 0.1-25.0 % wt.;
- Content of MnO, MnO₂ and Fe₂O₃ comprised in the range 0.1-15.0 % wt.;
- Content of fluoride, F⁻, comprised in the range 0.1-14.0 % wt.;
- Content of other oxides, such as TiO₂, B₂O₃, La₂O₃, comprised in the range 0.1-15.0 % wt;
- Average particle size of the components 0.1-400 µm, measured according to the standard method ASTM D4464-10.

A lubricating casting powder according to the present invention can comprise between 10% and 50% by weight of the mixture containing fluorosilicates obtainable with the method of the invention, between 0% and 15% by weight of sodium carbonate, between 0% and 15% by weight of fluorite, between 1% and 40% by weight of graphite, between 0% and 20% by weight of calcium carbonate, between 0% and 20% by weight of olivine, between 0% and 20% by weight of feldspar, between 0% and 20% by weight of glass, between 0 and 10% by weight of magnesite, between 0 and 20% by weight of calcium silicates, between 0% and 20% by weight of alumina and between 0% and 20% by weight of ash.

Alternatively, the lubricating casting powder according to the present invention can comprise a final composition between 0% and 30% by weight of free carbon, between 3% and 50% by weight of SiO₂, between 0% and 16% by weight of Fe₂O₃, between 0% and 16% by weight of Al₂O₃, between 10% and 45% by weight of CaO, between 0% and 11% by weight of MgO, between 1% and 18% by weight of Na₂O+K₂O, between 0% and 10% by weight MnO, between 1% and 13% by weight of F, between 0% and 5% by weight of Li₂O and between 0% and 5% by weight of B₂O₃.

The granulometries of the solids indicated in the present description can be determined by known methods comprising, for example, direct observation in the electronic microscope or assessment of particle sizes by means of laser scattering technology, using, for example, the Mastersizer 3000 instrument or the Malvern company Nanosizer with the Mie calculation method.

The lubricating composition of the invention can be used in amounts comprised between 50 and 1000 g/ton of cast steel.

A further use of the mixture containing fluorosilicates obtainable with the method of the present invention is in the production of glass-ceramics, e.g. functional or bioactive glass-ceramics, usable, for example, in the field of dental implantology.

One glass-ceramic according to the present invention comprises from 5% to 25% by weight of mixture containing fluorosilicates obtainable according to the present invention, from 5% to 2% by weight of calcium fluoride, from 10% to 40% by weight of alumina, from 1% to 20% by weight of sodium carbonate, from 10% to 40% by weight of quartz sand and from 1% to 2% by weight of a fluoride of an element of the group of rare earth elements.

### EMBODIMENT EXAMPLES

### Preparatory example 1

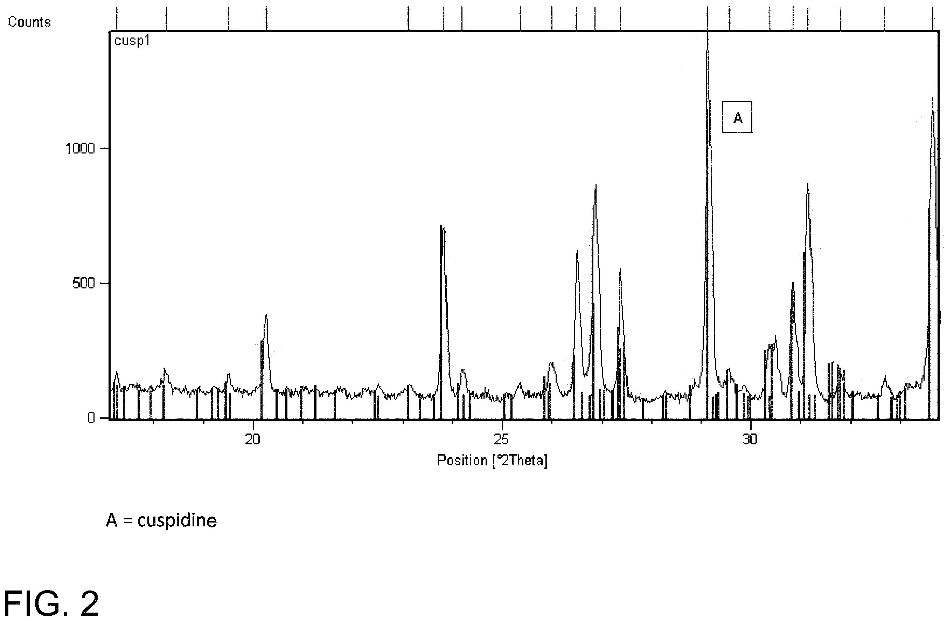

A mixture consisting of 53% of Wollastonite, 16% of limestone, 10% of sand, 11% of sodium carbonate and 10% of metallurgical-grade fluorite is loaded into pans of sintered alumina so as to have a homogenous thickness of 10 millimeters. The pan is then inserted into a muffle at 800°C for two hours. The product, thus obtained, consists of a mixture prevalently composed of cuspidine with a smaller content of combeite. The reaction yield, calculated on the mixture of products, is about 70% with respect to the initial mixture of reactants. From the diffractometry analysis reported in figure 2 a purity of such mixture of cuspidine and combeite is calculated higher than 80%.

### Preparatory example 2

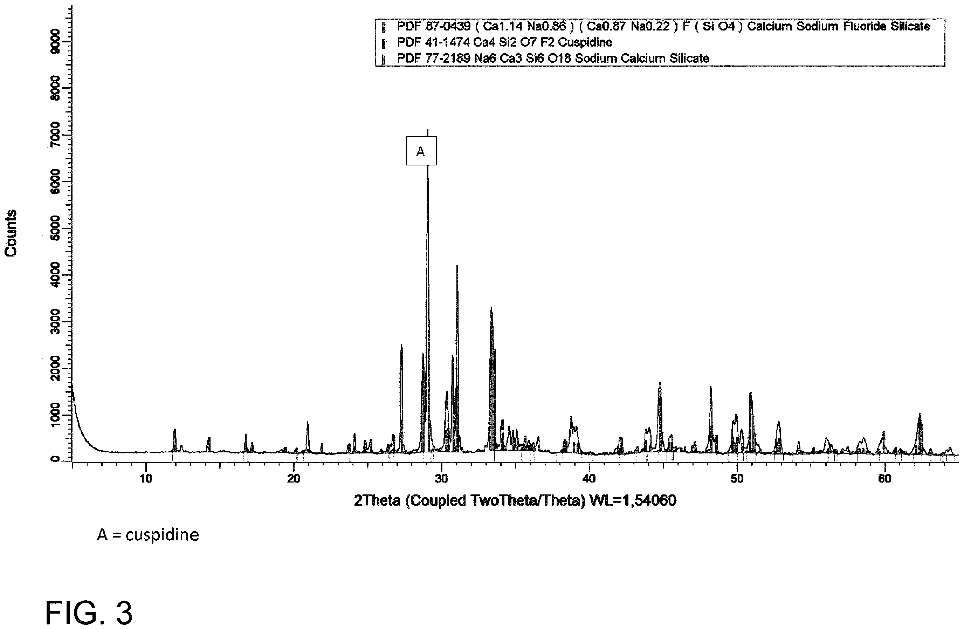

A mixture consisting of 46% limestone, 25% sand, 16% sodium carbonate and 13% acid-grade fluorite is briquetted into pellets having the maximum size of an inch using an organic binder. The pellets thus prepared are loaded into a rotary oven at 700°C with a residence time of 3 hours. The product obtained consists of a mixture of cuspidine and dicalcium sodium fluoride silicate. The reaction yield, calculated on the mixture of products, is about 70% with respect to the initial mixture of reactants. From the diffractometry analysis reported in figure 3 a purity of such cuspidine and dicalcium sodium fluoride mixture is calculated higher than 90%.

### Preparatory example 3

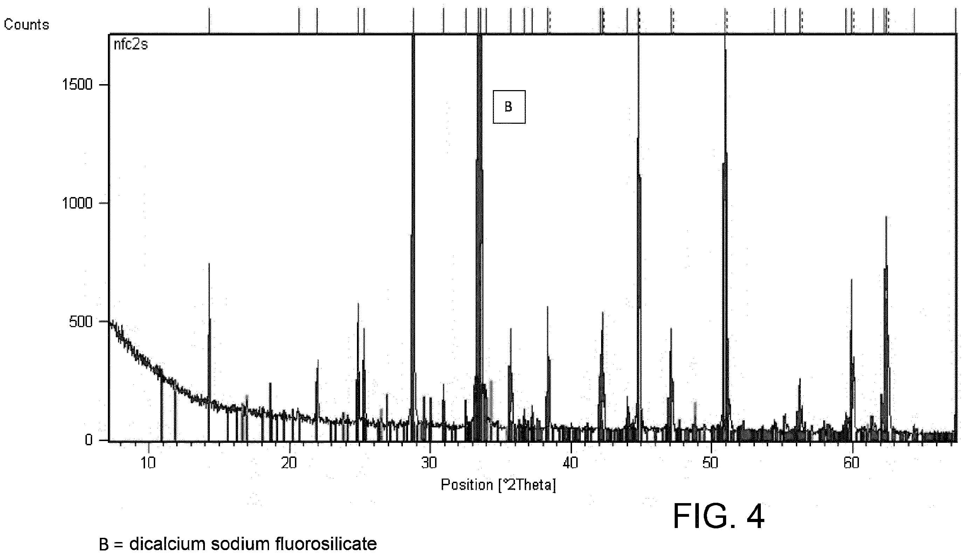

A mixture consisting of 40% of limestone, 26% of glass, 18% of sodium carbonate and 16% of metallurgical-grade fluorite was loaded into a tray of alumina for a thickness of one centimeter. The tray was then inserted into a tunnel oven at 850°C with a residence time of 2 hours. The product obtained consisted almost entirely of dicalcium sodium fluoride silicate. The reaction yield is about 85% out of the initial mixture of reactants. From the diffractometry analysis reported in figure 4 a purity of the product is calculated higher than 90%.

### Preparatory example 4

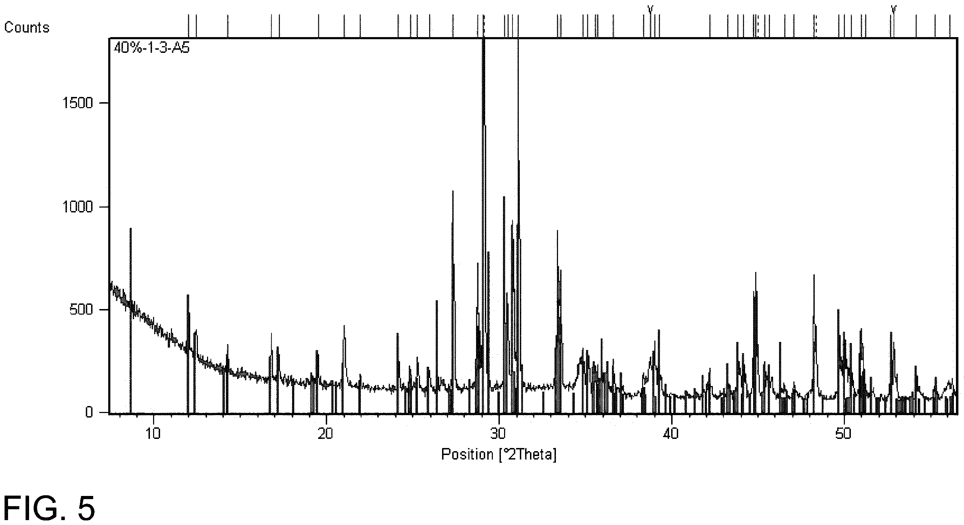

A mixture consisting of 40% of Wollastonite, 18% of limestone, 10% of ash, 20% of sodium carbonate and 12% of acid-grade fluorite is loaded into AISI 321 stainless steel pans so as to have a homogenous thickness of 20 millimeters. The pan is then inserted into a muffle with an exchange of air at 750°C for five hours. The product obtained consists of a mixture of cuspidine and dicalcium sodium fluoride silicate. The reaction yield, calculated on the mixture of products, is about 85% with respect to the initial mixture of reactants. From the diffractometry analysis reported in figure 5 a purity of such cuspidine and dicalcium sodium fluoride mixture is calculated higher than 90%.

### Example of use A - casting powder

A mixture containing 40% of the product obtained in example 1, 10% of sodium carbonate, 5% of fluorite, 5% of graphite, 5% of acid-grade fluorite, 15% of calcium carbonate, 4% of olivine and 7% of feldspar is dispersed in water with 2% of starch as a binder. The slip, thus obtained, is pumped into an atomizer from which a granulated continuous casting powder will come out, as the result, to be applied for the pouring of slabs.

### Example of use B - glass-ceramics

A mixture containing 10% of the product obtained in example 2, 17.5% of calcium fluoride, 33% of alumina, 3% of sodium carbonate, 35% of quartz sand and 1.5% of erbium (III) fluoride (ErF₃), is completely melted and then rapidly cooled. The glass obtained is successively heated up to 600°C and kept at such temperature for 1 hour. The product obtained is a functional glass-ceramic, wherein the main crystalline phase is the calcium fluoride and the emission band is at about 660 nm.

## Claims

1. A method for synthesizing fluorosilicates and silicates comprising the cooking, at a temperature of between 600°C and 850°C, of a mixture of starting materials, said mixture comprising compounds of Ca, Na, Si, O and F, wherein the mixture of starting materials comprising compounds of Ca, Na, Si, O and F has the following ponderal composition, excluding loss by calcination: Ca (as CaO) 35%-55%, Na (as Na₂O) 4%-25%, Si (as SiO₂) 15%-45%, F 4%-20%, and wherein the products of said method comprise cuspidine and/or dicalcium sodium fluorosilicate.

2. The method according to claim 1, wherein the mixture of starting materials comprising compounds of Ca, Na, Si, O and F has the following ponderal composition, excluding loss by calcination: CaO 40%-50%, SiO₂ 35%-45%, Na₂O 4%-8%, F 4%-10%, and wherein the product is substantially a mixture of cuspidine as main product and combeite as sub-product.

3. The method according to claim 1, wherein the mixture of starting materials comprising compounds of Ca, Na, Si, O and F has the following ponderal composition, excluding loss by calcination: CaO 40%-50%, SiO₂ 30%-40%, Na₂O 5%-15%, F 5%-15%, and wherein the product is substantially a mixture of cuspidine and dicalcium sodium fluorosilicate.

4. The method according to claim 1, wherein the mixture of starting materials comprising compounds of Ca, Na, Si, O and F has the following ponderal composition, excluding loss by calcination: CaO 45%-55%, SiO₂ 20%-30%, Na₂O 10%-25%, F 5%-15%, and wherein the product is substantially dicalcium sodium fluorosilicate.

5. The method according to any one of claims 1 to 4, wherein said starting materials are selected from limestone, lime, calcium silicates, glass, sodium silicates, sand, fluorite, sodium carbonate, feldspar and ash.

6. The method according to any one of claims 1 to 5, wherein the cooking is performed in static furnaces, e.g. muffles or continuous furnaces, e.g. rotary kilns or tunnel ovens with a thickness of the starting material mixture of between 0.5 and 20 cm and with a residence time at said temperature of between 600°C and 850°C preferably between 30 minutes and 24 hours.

7. A mixture of fluorosilicates and silicates obtainable with the method of any one of claims 1 to 6, wherein said mixture comprises, as main products, cuspidine and/or dicalcium sodium fluorosilicate.

8. Use of the fluorosilicate and silicate mixture according to claim 7 as component of lubricating casting powders.

9. Use of the fluorosilicate and silicate mixture according to claim 7 in the manufacturing of functional or bioactive glass-ceramics.

10. A lubricating casting powder comprising between 10% and 50% by weight of the mixture according to claim 7.

11. The lubricating casting powder according to claim 10, with a final composition between 0% and 30% of free carbon, between 3% and 50% of SiO₂, between 0% and 16% of Fe₂O₃, between 0% and 16% of Al₂O₃, between 10% and 45% of CaO, between 0% and 11% of MgO, between 1% and 18% of Na₂O+K₂O, between 0% and 10% MnO, between 1% and 13% of F, between 0% and 5% of Li₂O and between 0% and 5% of B₂O₃.

12. A functional or bioactive glass-ceramic comprising from 5% and 25% by weight of the mixture according to claim 7.

13. The functional or bioactive glass-ceramic according to claim 12, further comprising from 5% to 25% by weight of calcium fluoride, from 10% to 40% by weight of alumina, from 1% to 20% by weight of sodium carbonate, from 10% to 40% by weight of quartz sand and from 1% to 2% by weight of a fluoride of an element of the group of rare earth elements, preferably, but not exclusively, Erbium, terbium and Ytterbium.
